# EUROPÄISCHE PATENTANMELDUNG

(11) **EP 2 827 107 A1**
(43) Veröffentlichungstag der Anmeldung: **21.01.2015**
(21) Anmeldenummer: 14002360.7
(22) Anmeldetag: 09.07.2014
(51) Int. Cl.: G01D 21/00, H04Q 9/00

(54) **Aufzeichnungseinrichtung**

(30) Priorität: 17.07.2013 DE 202013006449 U
(71) Anmelder: ABB Technology AG, 8050 Zürich (CH)
(72) Erfinder: Johnston, Gareth, Bedford, MK417JW (GB)
(74) Vertreter: Marks, Frank

(57) **Zusammenfassung**

Die Erfindung betrifft eine Aufzeichnungseinrichtung (1) zur Visualisierung von Messwerten und Parametern von Feldgeräten in automatisierungstechnischen Einrichtungen mit mindestens einem analogen Eingang (7) zum zum direkten Anschluss mindestens eines leitungsgebundenen Feldgeräts sowie mit einer Ethernet-Schnittstelle (4) zum Kommunikation mit einer übergeordneten Einrichtung und mit einem grafischen Display (2) zur Anzeige und einer wechselbaren Speichereinheit (3) zur retrospektiven Aufzeichnung von Messwerten und Parametern von Feldgeräten. Zur kommunikativen Erfassung werden drahtgebundener als auch drahtloser Messwerterfassungen wird vorgeschlagen, dass eine drahtlose Kommunikationsschnittstelle (5) mit einem Signalumsetzer (6) vorgesehen sind, welcher mit der Ethernet-Schnittstelle (4) verbunden ist.

## Beschreibung

Die Erfindung betrifft eine Aufzeichnungseinrichtung zur Visualisierung von Messwerten und Parametern von Feldgeräten in automatisierungstechnischen Einrichtungen.

Aus dem Dokument Bedienungsanleitung IM/SM500F-D Rev. U, SM500F, Bildschirmschreiber im Feldgehäuse der Firma ABB ist eine gattungsgemäße Aufzeichnungseinrichtung bekannt, die über eine Mehrzahl analoger Eingänge zum direkten Anschluss von leitungsgebundenen Feldgeräten sowie über eine Ethernet-Schnittstelle zum Kommunikation mit einer übergeordneten Einrichtung verfügt.

Ferner ist diese Aufzeichnungseinrichtung mit einem grafischen Display zur Anzeige und einer wechselbaren Speichereinheit zur retrospektiven Aufzeichnung von Messwerten und Parametern von Feldgeräten ausgerüstet.

Aus der DE 10 2006 018 174 A1 _{*(Huck - 06*/*551)*} ist eine Messwerterfassungsvorrichtung zur Erfassung physikalischer Größen eines technischen Prozesses in einer verfahrenstechnischen Anlage, zur Umsetzung der physikalischen Größe in eine adäquate elektrische Größe und deren Ausgabe auf ein Kommunikationsmedium bekannt, bei der zur flexiblen Erfassung einer Mehrzahl von Messsignalen bei möglichst geringem Montageaufwand vorgeschlagen wird, die Funktionsgruppe zur Messwerterfassung und die Funktionsgruppe zur Messwertverarbeitung physisch voneinander getrennt und logisch über eine drahtlose Kommunikationsverbindung miteinander zu verbunden, die Funktionsgruppe zur Messwertverarbeitung über eine Leiterschleife mit einer übergeordneten Einrichtung zu verbinden, bei der die Energieversorgung und die Übertragung der Messinformation über das gleiche Adernpaar erfolgt, und die Funktionsgruppe zur Messwerterfassung unmittelbar an der Messstelle anzuordnen und lokal mit Energie zu versorgen.

Die Einrichtungen zur Messwerterfassung sind jedoch für die Aufzeichnungseinrichtung nicht erreichbar.

Der Erfindung liegt daher die Aufgabe zugrunde, die gattungsgemäße Aufzeichnungseinrichtung dahingehend weiterzubilden, dass sowohl drahtgebundene als auch drahtlose Messwerterfassungen kommunikativ erfasst werden.

Erfindungsgemäß wird diese Aufgabe mit den Mitteln des Patentanspruchs gelöst. Vorteilhafte Ausgestaltungen der Erfindung sind in den rückbezogenen Ansprüchen angegeben.

Die Erfindung geht aus von einer Aufzeichnungseinrichtung zur Visualisierung von Messwerten und Parametern von Feldgeräten mit mindestens einem analogen Eingang zum direkten Anschluss mindestens eines leitungsgebundenen Feldgeräts sowie mit einer Ethernet-Schnittstelle zum Kommunikation mit einer übergeordneten Einrichtung und mit einem grafischen Display zur Anzeige und einer wechselbaren Speichereinheit zur retrospektiven Aufzeichnung von Messwerten und Parametern von Feldgeräten.

Erfindungsgemäß ist die Aufzeichnungseinrichtung mit einer drahtlosen Kommunikationsschnittstelle mit einem Signalumsetzer ausgerüstet, welcher mit der Ethernet-Schnittstelle verbunden ist.

Die Kommunikationsschnittstelle ist ausgebildet, mit den drahtlosen Messwerterfassungseinrichtungen kommunikativ in Kontakt zu treten und Daten auszutauschen. Der Datenstrom wird mit Hilfe des Signalumsetzers in ein Datenformat umgewandelt, dass in der Aufzeichnungseinrichtung bereits implementiert ist. Vorteilhafterweise sind dadurch auch Messwerte und Parameter von drahtlosen Messwerterfassungseinrichtungen auf dem grafischen Display der Aufzeichnungseinrichtung visualisierbar und in der Speichereinheit ablegbar.

Somit sind Anzeigevorrichtungen an den drahtlosen Messwerterfassungseinrichtungen verzichtbar. Vorteilhafterweise kommen die drahtlosen Messwerterfassungseinrichtungen dadurch mit einer geringeren Vorsorgungsleistung aus. Bei batteriegespeisten drahtlosen Messwerterfassungseinrichtungen wird dadurch die Batterielebensdauer und somit die wartungsfreie Betriebszeit verlängert; bei batterielosen drahtlosen Messwerterfassungseinrichtungen mit Eigenversorgung aus Prozess- oder Umweltenergie steigt deren Verfügbarkeit.

Darüber hinaus ermöglicht die erfindungsgemäße Aufzeichnungseinrichtung die Überwachung und Beobachtung von Netzwerkparametern des drahtlosen Netzwerks der potentialfreien drahtlosen Messwerterfassungseinrichtungen.

Vorteilhafterweise ermöglicht die erfindungsgemäße Aufzeichnungseinrichtung darüber hinaus die Kommunikation der drahtlosen Messwerterfassungseinrichtungen mit der übergeordneten Einrichtung, indem der Datenstrom der drahtlosen Kommunikation auf den Datenstrom der Ethernet-Schnittstelle zum Kommunikation mit einer übergeordneten Einrichtung abgebildet wird.

Nach einem weitern Merkmal der Erfindung ist die erfindungsgemäße Aufzeichnungseinrichtung als Host-System ausgebildet.

Vorteilhafterweise unterstützt die Aufzeichnungseinrichtung die Inbetriebnahme von Feldinstrumenten ohne Zugriff auf die übergeordnete Einrichtung.

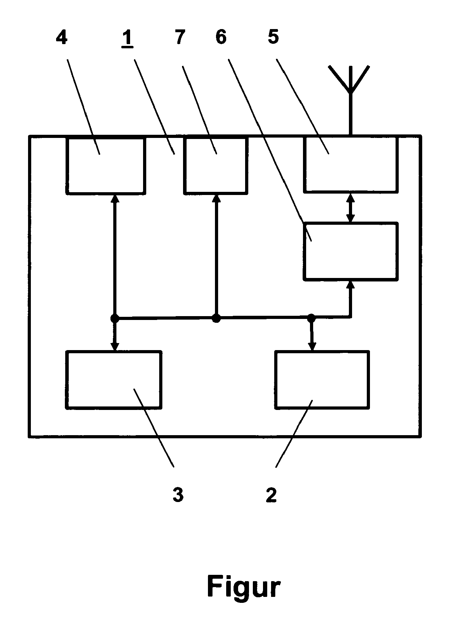

Die Erfindung wird nachstehend anhand eines Ausführungsbeispiels näher erläutert. In der einzigen Figur ist eine Aufzeichnungseinrichtung 1 im Umfang der erfindungswesentlichen Komponenten prinzipiell dargestellt.

Die Aufzeichnungseinrichtung 1 weist zur Visualisierung von Messwerten und Parametern von Feldgeräten mit mindestens einem analogen Eingang 7 zum direkten Anschluss mindestens eines leitungsgebundenen Feldgeräts auf sowie ein grafisches

Display 2 zur Anzeige der Messwerte und Parameter auf. Darüber hinaus ist die Aufzeichnungseinrichtung 1 mit einer Ethernet-Schnittstelle 4 zum Kommunikation mit einer übergeordneten Einrichtung ausgestattet. Eine wechselbaren Speichereinheit 3 ist zur retrospektiven Aufzeichnung von Messwerten und Parametern von Feldgeräten vorgesehen.

Darüber hinaus ist die Aufzeichnungseinrichtung 1 mit einer drahtlosen Kommunikationsschnittstelle 5 mit einem Signalumsetzer 6 ausgerüstet, welcher mit der Ethernet-Schnittstelle 4 verbunden ist.

### Bezugszeichenliste

- 1: Aufzeichnungseinrichtung
- 2: Display
- 3: Speichereinheit
- 4: Ethernet-Schnittstelle
- 5: drahtlose Kommunikationsschnittstelle
- 6: Signalumsetzer
- 7: Analoger Eingang

## Patentansprüche

1. Aufzeichnungseinrichtung zur Visualisierung von Messwerten und Parametern von Feldgeräten mit mindestens einem analogen Eingang zum zum direkten Anschluss mindestens eines leitungsgebundenen Feldgeräts sowie mit einer Ethernet-Schnittstelle zum Kommunikation mit einer übergeordneten Einrichtung und mit einem grafischen Display zur Anzeige und einer wechselbaren Speichereinheit zur retrospektiven Aufzeichnung von Messwerten und Parametern von Feldgeräten,
**dadurch gekennzeichnet,**
**dass** eine drahtlose Kommunikationsschnittstelle mit einem Signalumsetzer vorgesehen sind, welcher mit der Ethernet-Schnittstelle verbunden ist.

2. Aufzeichnungseinrichtung nach Anspruch 1
**dadurch gekennzeichnet,**
**dass** die Kommunikationsschnittstelle ausgebildet ist, mit drahtlosen Messwerterfassungseinrichtungen kommunikativ in Kontakt zu treten und Daten auszutauschen.

3. Aufzeichnungseinrichtung nach einem der Ansprüche 1 und 2
**dadurch gekennzeichnet,**
**dass** die Aufzeichnungseinrichtung als Host-System ausgebildet ist.
